# EUROPEAN PATENT APPLICATION

(11) **EP 3 156 107 A1**
(43) Date of publication of application: **19.04.2017**
(21) Application number: 16186455.8
(22) Date of filing: 30.08.2016
(51) Int. Cl.: A63B 69/36, A63B 69/38, A63B 71/06, A63B 22/06, A63B 21/055, A63B 21/00, A63B 23/035, A63B 23/12

(54) **POSITION CHANGEABLE SENSOR**

(30) Priority: 14.10.2015 TW 104216444
(71) Applicant: Chuang, Lung Fei, Taichung City 42083 (TW)
(72) Inventor: Chuang, Lung Fei, Taichung City 42083 (TW)
(74) Representative: Lang, Christian

(57) **Abstract**

The present disclosure discloses a position changeable sensor (100) which is disposed on an exercise equipment. The position changeable sensor includes a main body (110) removably disposed on a selectable position on the exercise equipment. The main body includes at least one gravity sensor (140) and a removable connecting device connected with the exercise equipment and the main body.

## Description

### BACKGROUND

### Technical Field

The present disclosure relates to a position changeable sensor. More particularly, the present disclosure relates to a position changeable sensor which is removable and can be disposed on different positions of an exercise equipment.

### Description of Related Art

With the advance of technological development, urbanites become more and more busy and activity space is limited. Therefore, it is important for people living in cities to be able to exercise in limited time and space, thus many indoor exercise equipments are developed for meeting the demand as described.

The intensity of some types of static exercises, such as weightlifting, push-ups or riding stationary bikes, can be varied with operation cycles. By setting the cycle of operation for each of these static exercises, the practice targets help different trainees to achieve their goals authentically and safely. Another advantage is that the trainees can encourage and challenge themselves again and again according to the record of cycles during the training. However, calculating the amount of cycles of operation accurately is impractical for a person who is doing an exercise. In view of this, many kinds of counters for different exercises are launched into the market and with great popularity.

Conventionally, the counter is fixed on one immutable position of an exercise equipment. This is due to the fact that most of the conventional exercise equipments have only a single-directional motion so that there is no need to dispose two or more counters at different positions. For the demand of complex training, exercise equipments having multi-exercise parts or multi-motion routes are getting more popular. Thus the method of fixing one counter or one sensor on one position is no more suitable for the above situation.

Moreover, in the internet era, people are used to share their daily life information to others with cell phones or Tablet PCs. The sharing of information definitely includes the record of exercises, for example, number of push-ups, heart rate or caloric cost. Opposite to the change, a conventional counter is used only for single and particular exercise motion and also can't transmit the mentioned information to electronic devices.

Therefore, the conventional counters that only can be applied on a single part of the exercise equipment are out of use. Therefore, a device that is capable for sensing different exercise parts and motion routes, and can directly transmit exercise records to other electronic devices is needed.

### SUMMARY

According to an embodiment of the present disclosure, a position changeable sensor which is disposed on an exercise equipment includes a main body removably disposed on a selectable position on the exercise equipment. The main body includes at least one gravity sensor and a removable connecting device connected with the exercise equipment and the main body.

In one example, the exercise equipment includes two exercise parts having two different motion routes, and the selectable position belongs to one of these exercise parts.

In one example, the gravity sensor includes three to nine sensing axes.

In one example, the removable connecting device is a velcro, a container or a buckle.

In one example, the removable connecting device is an attaching member disposed on the main body and the attaching member is removably attached to the exercise equipment.

In one example, the attaching member is a chuck and the exercise part is a flat surface.

In one example, the exercise equipment is a tennis racket, a golf club or a dumbbell.

In one example, the attaching member is a magnet and the exercise part is a metal surface with magnetic induction.

In one example, the attaching member is a chuck and the selectable position is a flat surface.

In one example, the attaching member is a magnet and the selectable position is a metal surface with magnetic induction.

In one example, the position changeable sensor further includes a wireless handheld device. The main body further includes a wireless transmitter connected with the gravity sensor for transmitting data outwardly and the wireless handheld device is for receiving the data transmitted by the wireless transmitter.

In one example, the wireless handheld device is a cell phone or a Tablet PC.

In one example, the wireless transmitter uses a Bluetooth signal.

### BRIEF DESCRIPTION OF THE DRAWINGS

The disclosure can be more fully understood by reading the following detailed description of the embodiments, with reference made to the accompanying drawings as follows:
Fig. 1 is a front side view of a position changeable sensor according to one embodiment of the present disclosure;
Fig. 2 is a schematic view of an attaching member of the position changeable sensor of Fig. 1, wherein the attaching member is a magnet;
Fig. 3 is an exploded view of the position changeable sensor of Fig. 1;
Fig. 4 is a schematic view of another attaching member of the position changeable sensor of Fig. 1, wherein the attaching member is a chuck;
Fig. 5 is a schematic view of a removable connecting device of the position changeable sensor of Fig. 1, wherein the connecting device is a buckle;
Fig. 6 is a schematic view of another removable connecting device of the position changeable sensor of Fig. 1, wherein the connecting device is a velcro;
Fig. 7 is a schematic view of another removable connecting device of the position changeable sensor of Fig. 1, wherein the connecting device is a container;
Fig. 8 is a schematic view showing the position changeable sensor disposed on an exercise equipment;
Fig. 9 is another schematic view showing the position changeable sensor disposed on an exercise equipment;
Fig. 10 is a schematic view showing the position changeable sensor assembled with a wireless handheld device and disposed on an exercise equipment;
Fig. 11 is another schematic view showing the position changeable sensor assembled with a wireless handheld device and disposed on an exercise equipment; and
Fig. 12 is a schematic view showing a position changeable sensor without a monitor.

### DETAILED DESCRIPTION

In the following the present disclosure is described with reference to the drawings. For describing precisely, the details in practice will be introduced as below, but the details should not be a limitation of the present disclosure. Namely, the details introduced in the specification are optional. Moreover, for simplifying the drawings, the conventional structures or members will only be shown briefly therein and the repeated members will be labeled with the same number.

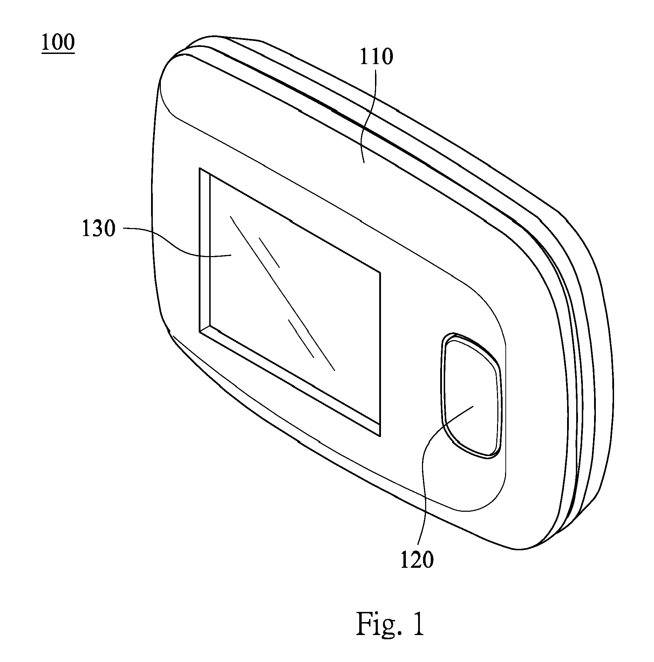

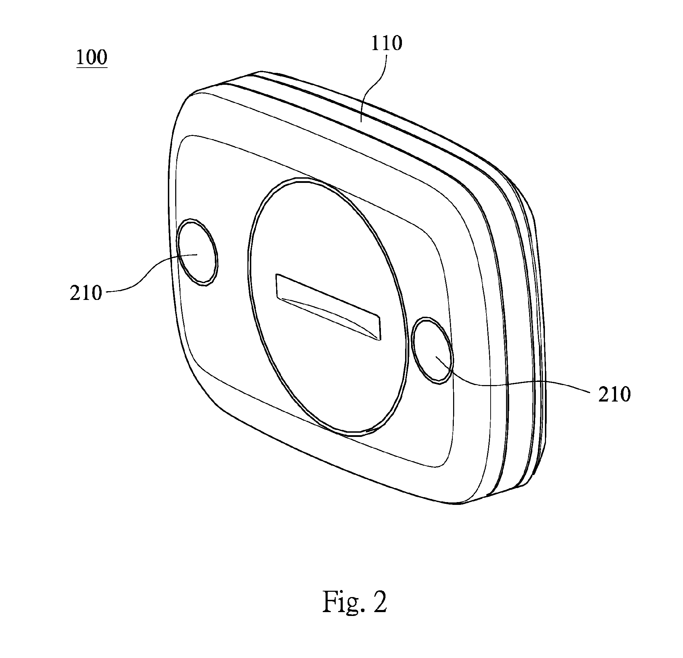

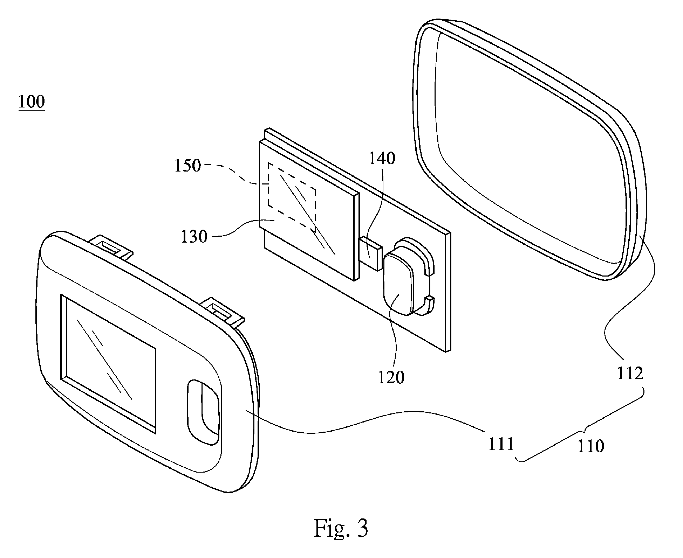

Fig. 1 is a front side view of a position changeable sensor 100 according to one embodiment of the present disclosure. Fig. 2 is a schematic view of an attaching member of the position changeable sensor 100 of Fig. 1 which is a magnet 210. Fig. 3 is an exploded view of the position changeable sensor 100 of Fig. 1.

Please refer to Fig. 1, Fig. 2 and Fig. 3. The position changeable sensor 100 includes a main body 110 and a magnet 210. The main body 110 includes at least one gravity sensor 140 and a wireless transmitter 150. The main body 110 is a cuboid with rounded corners and is made of plastic. The main body is hollow therein for accommodating an electronic member, such as a circuit board. The main body 110 is consisting of a front lid 111 and a rear lid 112 and can be disasembled. The main body 110 includes holes for exposing a button 120 and a monitor 130. The button 120 can be pushed to change the display content of the monitor 130. The detail structure of the main body 110 will be described later. Moreover, the monitor 130 is optional according to the user's requirements.

In Fig. 2, the two magnets 210 are circular sheets and are disposed on the rear lid 112. The two magnets 210 act as the attaching member in this embodiment.

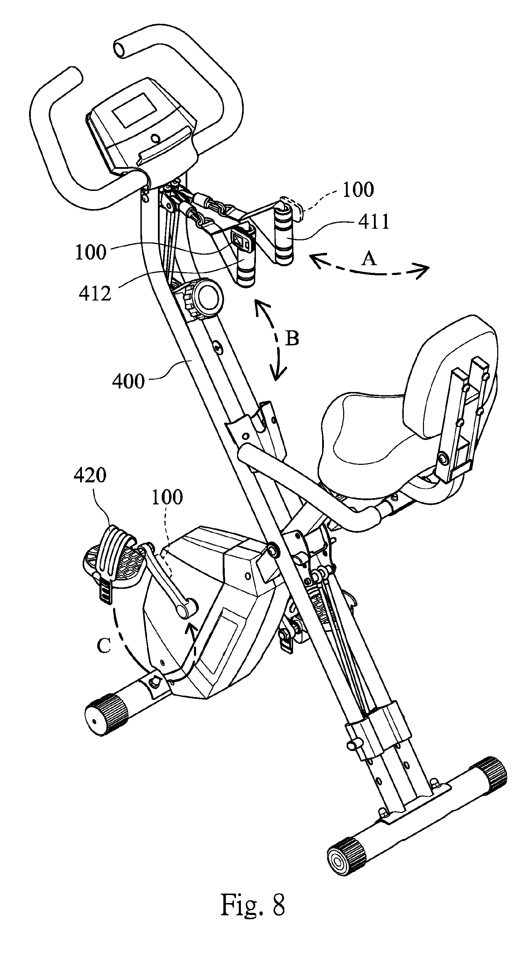

Fig. 8 is a schematic view showing the position changeable sensor 100 disposed on an exercise equipment 400. In Fig. 8, the position changeable sensor 100 can be disposed on the exercise equipment 400 which includes two exercise parts.

In Fig. 3, the main body 110 is consisting of the front lid 111 and the rear lid 112. The main body 110 is hollow therein for accommodating a circuit board. The circuit board, the button 120, the monitor 130, the gravity sensor 140 and the wireless transmitter 150 can be disposed on the circuit board. The main body 110 includes holes so that the button 120 and the monitor 130 can be exposed out from the main body 110.

In one example, the exercise equipment 400 includes three exercise parts, namely a first handle 411, a second handle 412 and a pedal 420. When a user operates the exercise equipment 400, the user pulls the first handle 411 and the second handle 412 with his hands. In this circumstances, the first handle 411 and the second handle 412 move along a first motion route A and a second motion route B respectively, and the pedal 420 swings along a third motion route C. A position changeable sensor 100 can be removably disposed on the three exercise parts of the exercise equipment 400 with a magnet 210. The quantity and the position of the main bodys 110 is selectable. When the user operates the exercise equipment 400, the gravity sensor 140 of the main body 110 records data and the wireless transmitter 150 transmits the data outwardly. By operation of the bottom 120 the user can change the display content of the monitor 130 to show the information to the user.

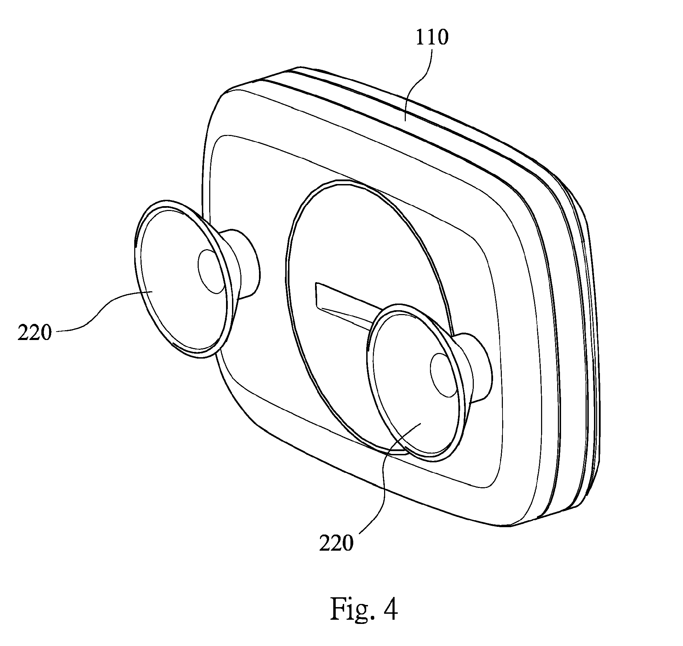

Fig. 4 is a schematic view of an attaching member of the position changeable sensor of Fig. 1 which is a chuck 220. In Fig. 4, the attaching member of the position changeable sensor 100 is formed as two chucks 220 disposed on the rear lid 112.

In one example, the gravity sensor 140 can have three to nine sensing axes for detecting exercise data of the user. The wireless transmitter 150 can transmit the exercise data through a Bluetooth signal. The exercise part can be a flat surface, and the attaching member can be a magnet 210. In detail, the exercise equipment 400 can include a surface with magnetic induction and can be attached by the magnet 210. Similarly, the flat surface can be attached by the chuck 220. The attaching action applied when using the chuck 220 is a well-known art and therefore will not be described herein.

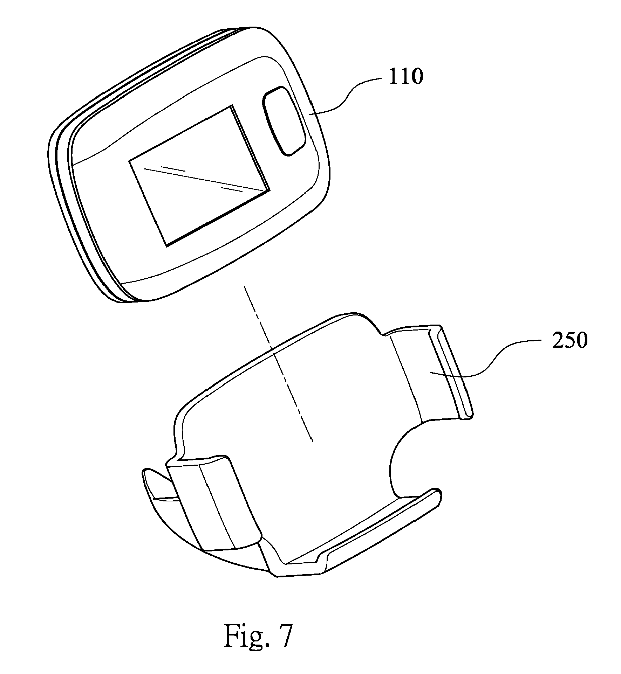

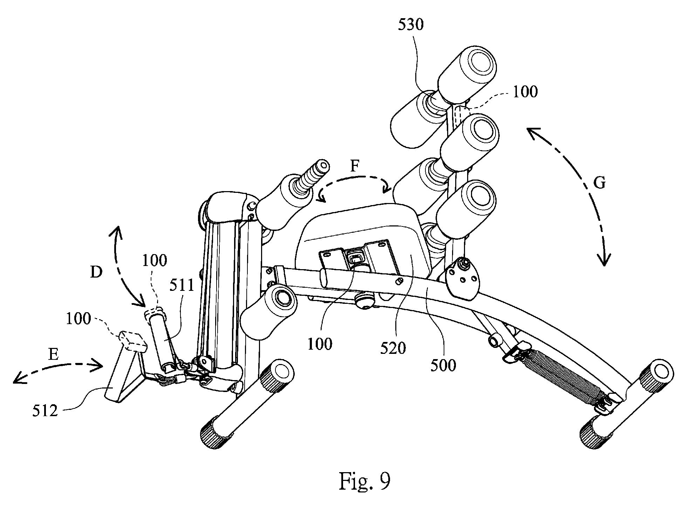

Fig. 7 is a schematic view of a removable connecting device of the position changeable sensor 100 of Fig. 1 which is a container 250. Fig. 9 is a schematic view showing the position changeable sensor 100 disposed on an exercise equipment 500. In Fig. 9, the position changeable sensor 100 is disposed on the exercise equipment 500 and the exercise equipment 500 includes three exercise parts, namely a third handle 511, a fourth handle 512 and a pedestal 520 or a backrest 530. When a user operates the exercise equipment 500, the user pulls the third handle 511 and the fourth handle 512 with his hands. In these circumstances, the third handle 511 and the fourth handle 512 move along a fourth motion route D and a fifth motion route E, respectively. When the user sits on the pedestal 520, the pedestal 520 then sways along a sixth motion route F, or , when the user lies on the backrest 530, the backrest 530 then sways along a seventh motion route G. The main body 110 is removably disposed on the third handle 511, the fourth handle 512, the pedestal 520 and the backrest 530 of the exercise equipment 500 with the container 250. The gravity sensor 140 in the main body 110 records data and the wireless transmitter 150 can transmit the data outwardly.

In Fig. 7, the container 250 is made of plastic and has an accommodating structure to accommodate the main body 110. In brief, the container 250 is fixed on the exercise part for the user to operate. Then the position changeable sensor 100 can be disposed inside the accommodating structure of the container 250. Also, the container 250 can be fixed on the exercise part by a velcro or a magnet.

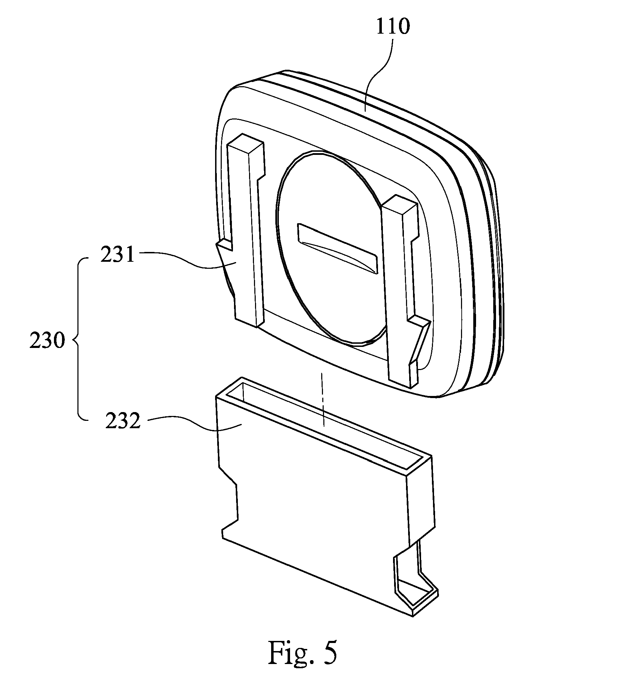

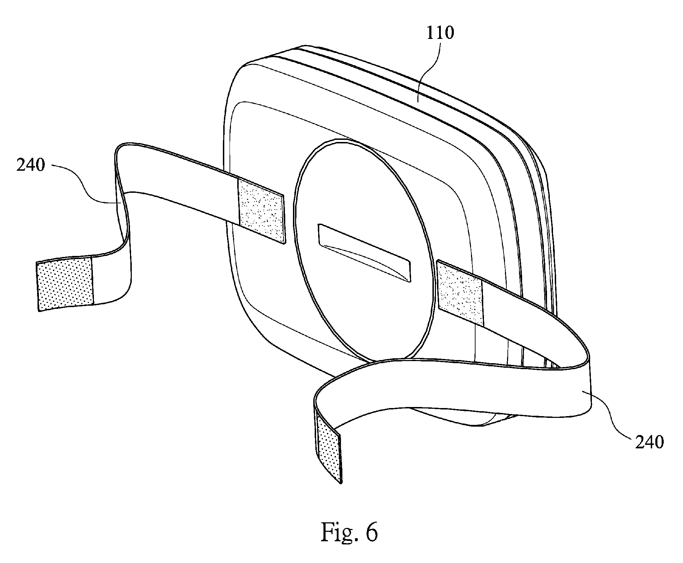

In one example, the position of the container 250 can be changed or selected. Fig. 5 is a schematic view of a removable connecting device of the position changeable sensor 100 of Fig. 1 which is a buckle 230. Fig. 6 is a schematic view of a removable connecting device of the position changeable sensor 100 of Fig. 1 which is a velcro 240. In Fig. 5, the buckle 230 includes a front end 231 and a rear end 232. The front end 231 buckles with the main body 110 and the rear end 232 can be placed on the exercise part which is a flat surface. Therefore, the buckle 230 can connect the exercise equipment 500 and the main body 110 with the front end 231 and the rear end 232. In Fig. 6, the removable connecting device is formed as a velcro 240 which connects the exercise equipment 500 and the main body 110.

In Fig. 5, the rear end 232 can be fixed on the exercise equipment with a velcro or a magnet. The front end 231 can be two strips and fixed on the rear lid 112. The front end 231 includes a protrusion, and the rear end 232 includes a cavity. Therefore, the position changeable sensor 100 can be fixed on the selected position with the protrusion and the cavity of the buckle 230.

In Fig. 6, the velcro 240 is consisting of two ribbons that have crochet and velour, respectively. The crochet hooks the velour so that the velcro 240 can connect the two ribbons to fix the main body 110.

In one example, the gravity sensor 140 can have three to nine sensing axes for detecting exercise data of the user. The wireless transmitter 150 can transmit the exercise data through a Bluetooth signal. The features are the same as described above and therefore will not be stated again herein.

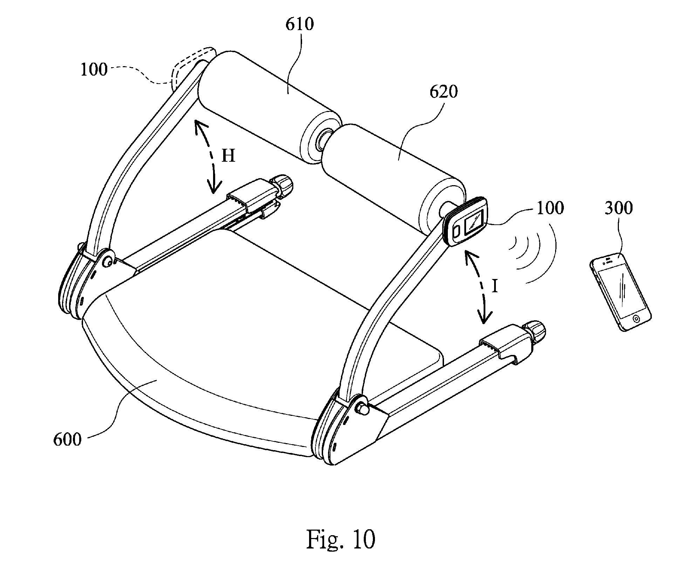

Fig. 10 is a schematic view showing the position changeable sensor 100 being disposed on an exercise equipment 600 in combination with a wireless handheld device 300 . In Fig. 2, Fig. 3 and Fig. 10, the position changeable sensor 100 is disposed on the exercise equipment 600. The exercise equipment 600 includes a right portion 610 and a left portion 620 for stepping. When stepped, the right portion 610 and the left portion 620 will swing along an eighth motion route H and a ninth motion route I, respectively. The attaching member can be a magnet 210 that is attached to the right portion 610 and the left portion 620. Moreover, the gravity sensor 140 of the main body 110 records the data and the wireless transmitter 150 transmits the data outwardly as previously mentioned. The user can use the wireless handheld device 300 to receive and process the data transmitted from the wireless transmitter 150.

Also, in the example, the attaching member can be a chuck 220 as shown in Fig. 4.

In one example, the position changeable sensor 100 can be disposed on a tennis racket, a golf club or a dumbbell. The wireless handheld device 300 can be a cell phone or a Tablet PC, wherein the wireless handheld device 300 can process the data transmitted from the wireless transmitter 150, such as counts, distance or time. The information displayed to the user can include displacement, rates, gesture recognition, panning, zooming, scrolling, free fall interrupt, high-G interrupt, zero-motion detection, tap detection, shake detection and even calories. Features about the number of the sensing axes of the gravity sensor 140, the Bluetooth signal used in the wireless transmitter 150 and the attaching member being a magnet 210 or a chuck 220 that absorbs on a flat surface can also be applied in this example.

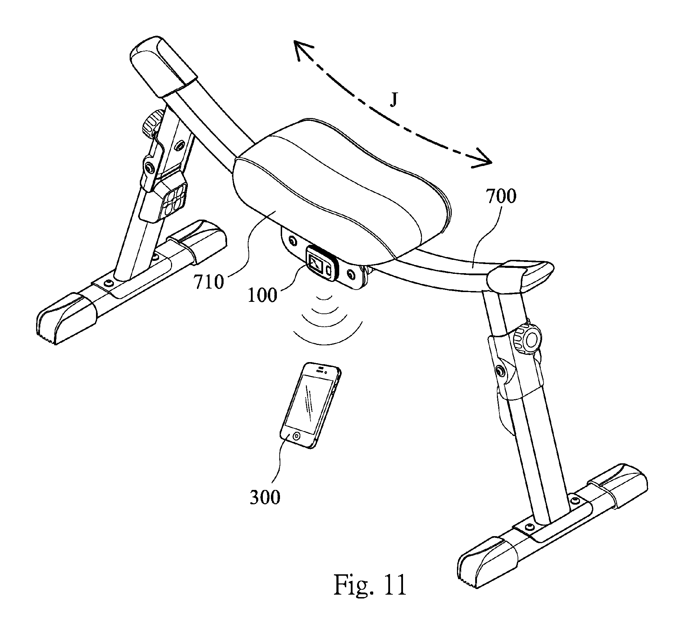

Fig. 11 is a schematic view showing the position changeable sensor 100 disposed on an exercise equipment 700 in combination with a wireless handheld device 300. In Fig. 3, Fig. 7 and Fig. 11, the position changeable sensor 100 is disposed on an exercise equipment 700, wherein the user sits on a shaking cushion 710 and swings along a tenth motion route J.

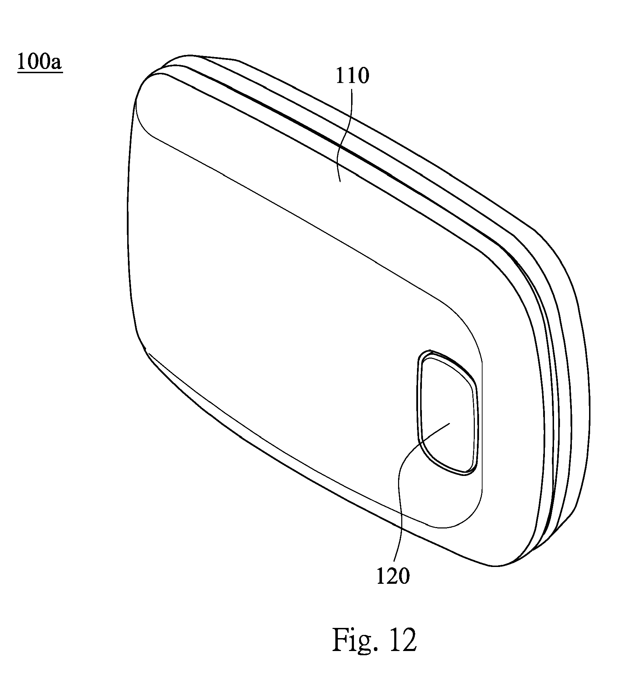

Fig. 12 is a schematic view showing a position changeable sensor 100a excluding a monitor 130. The position changeable sensor 100a includes a main body 110 and a button 120. Except for the monitor 130, the position changeable sensor 100a is the same as described in the example shown in Fig. 3. Similarly, the position changeable sensor 100a can include a wireless transmitter 150 to transmit the data outwardly.

According to the aforementioned embodiments, the advantages of the present disclosure are described as follows. 1. The user can select different exercise parts to install the position changeable sensor thereon, so as to record the corresponding exercise data. 2. By using the gravity sensor, the position changeable sensor can measure more types of exercise data than conventional sensing equipment. 3. The position changeable sensor can transmit the data outwardly to an external device, such as a mobile phone or Tablet PC, so that the user can review the information on his personal electronic edevices. 4. Being different from the conventional sensing equipments, the position changeable sensor is removable and portable, so that it can be used to record the data on different exercise equipments or to record the caloric cost of the user all day.

## Claims

1. A position changeable sensor (100) disposed on an exercise equipment, comprising:
a main body (110) removably disposed on a selectable position on the exercise equipment, comprising:
at least one gravity sensor (140); and
a removable connecting device connected with the exercise equipment and the main body (110).

2. The position changeable sensor (100) of claim 1, wherein the exercise equipment comprises two exercise parts having two different motion routes and the selectable position belonging to one of the exercise parts.

3. The position changeable sensor (100) of claim 2, wherein the gravity sensor (140) comprises three to nine sensing axes.

4. The position changeable sensor (100) of claim 2, wherein the removable connecting device is a velcro, a container or a buckle.

5. The position changeable sensor (100) of claim 2, wherein the removable connecting device is an attaching member disposed on the main body (110), wherein the attaching member is removably attached to the exercise equipment.

6. The position changeable sensor (100) of claim 5, wherein the gravity sensor (140) comprises three to nine sensing axes.

7. The position changeable sensor (100) of claim 5, wherein the attaching member is a magnet (210) and the exercise part is a metal surface with magnetic induction.

8. The position changeable sensor (100) of claim 5, wherein the attaching member is a chuck (220) and the exercise part is a flat surface.

9. The position changeable sensor (100) of claim 1, wherein the exercise equipment is a tennis racket, a golf club or a dumbbell.

10. The position changeable sensor (100) of claim 1, wherein the gravity sensor comprises three to nine sensing axes.

11. The position changeable sensor (100) of claim 1, wherein the attaching member is a magnet (210) and the selectable position is a metal surface with magnetic induction.

12. The position changeable sensor (100) of claim 1, wherein the attaching member is a chuck (220) and the selectable position is a flat surface.

13. The position changeable sensor (100) of claim 1, further comprising a wireless handheld device (300), wherein the main body (110) further comprises a wireless transmitter (150) connected with the gravity sensor (140) for transmitting data outwardly, and wherein the wireless handheld device (300) is for receiving the data transmitted by the wireless transmitter (150).

14. The position changeable sensor (100) of claim 13, wherein the exercise equipment is a tennis racket, a golf club or a dumbbell.

15. The position changeable sensor (100) of claim 13, wherein the wireless handheld device (300) is a cell phone or a Tablet PC.

16. The position changeable sensor (100) of claim 13, wherein the gravity sensor comprises three to nine sensing axes.

17. The position changeable sensor (100) of claim 13, wherein the wireless transmitter (150) uses a Bluetooth signal.

18. The position changeable sensor (100) of claim 13, wherein the removable connecting device is a velcro, a container or a buckle.
